# EUROPEAN PATENT APPLICATION

(11) **EP 2 889 718 A1**
(43) Date of publication of application: **01.07.2015**
(21) Application number: 15150035.2
(22) Date of filing: 02.01.2015
(51) Int. Cl.: G06F 1/16, G06F 3/01, G06F 3/03, G02B 27/01

(54) **A natural input based virtual ui system for electronic devices**

(30) Priority: 30.12.2013 US 201314143834
(71) Applicant: Samsung Electronics Co., Ltd, Gyeonggi-do 443-742 (KR)
(72) Inventor: Xia, Zhiping, San Jose, CA California 95117 (US); Tao, Wenwei, Milpitas, CA 95035-6440 (US)
(74) Representative: Jenkins, Richard Gavin

(57) **Abstract**

An apparatus and a method for recognizing and translating natural input signals into User Interface (UI) commands and messages to manage and control a Palmtop virtual UI system. The method includes receiving the natural input signals in a field of view of an input device, recognizing and translating the received natural input signals into the UI commands and messages, and generating and displaying the UI on the input device.

## Description

### TECHNICAL FIELD

The present disclosure relates to an input system and method for electronic devices. More particularly, the present disclosure relates to a natural input based virtual User Interface (UI) system and method for inputting information in an electronic device.

### BACKGROUND

Various technologies can be utilized to display information to a user of a system. Some systems for displaying information may utilize "heads-up" displays. A heads-up display can be incorporated into a pair of glasses, such as Augmented Reality (AR) glasses, a helmet, or other such devices that the user can wear. A heads-up display is typically positioned near the user's eyes to allow the user to review displayed information with little or no head movement. Information can be input into these technologies using a variety of methods.

For example, U.S. Patent Publication No. 2012/0299870 to Chai et al. (hereinafter Chai) discloses a wearable heads-up display requiring that the user of the wearable heads-up display enter information using a finger operable input device with a touch surface attached to the frame of the glasses. Similarly, U.S. Patent Publication No. 2011/0221669 to Shams et al. (hereinafter Shams) discloses an integrated hardware and software system having a built-in wearable computing device, such as Augmented Reality (AR) glasses to gather user gestures as inputs and generate command instructions. Finally, EP 1027627 to Spitzer (hereinafter Spitzer) discloses a wearable electronic device having the capability of capturing audio, video, and a heads up display in the eyeglasses, similar to Chai.

However, a need exists for a natural input based virtual User Interface (UI) system for electronic devices.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an apparatus and method for inputting information in an electronic device using a virtual UI system based on a natural input. Another aspect of the present disclosure is to use Computer Vision (CV) results to dynamically generate a display layout and superimpose a User Interface (UI) display over a user's hand in Augmented Reality (AR) glasses.

Another aspect of the present disclosure is to provide an electronic device including a wearable frame, at least one lens including a Computer Vision (CV) detection area, and a processor, wherein the CV detection area is configured to generate and to display a User Interface (UI) and to translate a signal received in a field of view of the CV detection area into a command.

In accordance with an aspect of the present disclosure, a method for controlling an electronic device using natural inputs is provided, the method includes generating and displaying a User Interface (UI) on an input apparatus, receiving a natural input in a field of view of the input apparatus, and translating the received natural input into image data and interpreting the image data as a UI command.

In accordance with another aspect of the present disclosure, a Computer Vision (CV) assisted virtual User Interface (UI) system is provided. The system includes a head mounted wearable user device, at least one lens including a CV detection area, and a camera configured to capture images of a user of the head mounted wearable device and to output a signal in response to the captured image, wherein the CV detection area is configured to generate and to display the UI and to translate the output signal into a command.

In accordance with another aspect of the present disclosure, a method of recognizing and translating natural input signals into User Interface (UI) commands and messages to manage and control a Palmtop virtual UI system is provided. The method includes receiving the natural input signals in a field of view of an input device, recognizing and translating the received natural input signals into the UI commands and messages, and generating and displaying the UI on the input device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a perspective view of a natural input based virtual User Interface (UI) system according to an embodiment of the present disclosure;
FIG. 2 is a view of a computer vision detection area of an input device of the system according to an embodiment of the present disclosure;
FIG. 3 is a diagram of a cloud based computer vision service according to an embodiment of the present disclosure;
FIG. 4 is an example of a system menu displayed on an input device of the system according to an embodiment of the present disclosure;
FIG. 5 is an example of a menu displayed on an input device of the system according to an embodiment of the present disclosure; and
FIG. 6 is an example of a menu displayed on an input device of the system according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

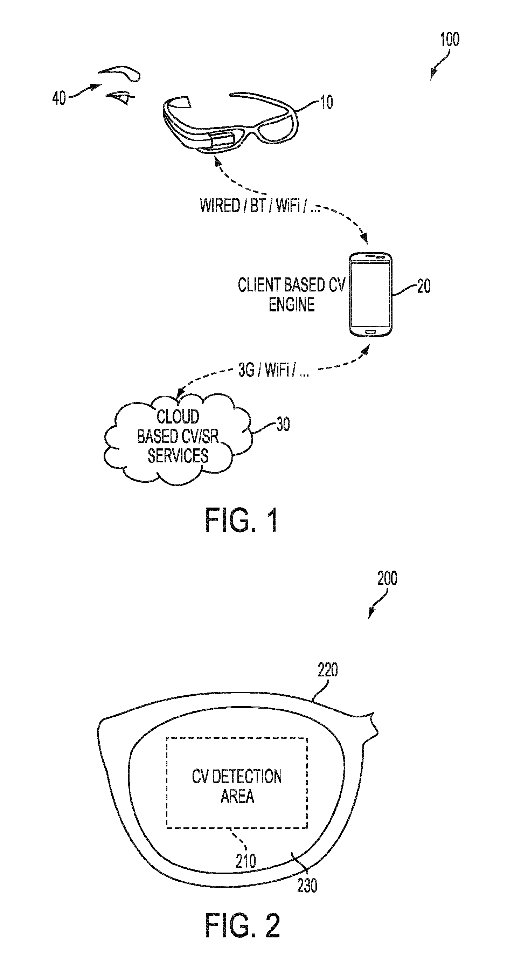

FIGS. 1 through 6, discussed below, and the various embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the present disclosure. Terms first, second, and the like are used to differentiate between objects having the same terminology and are in no way intended to represent a chronological order, unless where explicitly stated otherwise. A set is defined as a non-empty set including at least one element.

FIG. 1 is a perspective view of a natural input based virtual User Interface (UI) system according to an embodiment of the present disclosure.

Referring to FIG. 1, the natural input based virtual UI system 100 is a Computer Vision (CV) assisted virtual User Interface (UI) system for electronic devices and/or a Speech Recognition (SR) assisted virtual UI system for electronic devices. The CV/SR assisted virtual UI system may include a wearable display 10, an electronic device 20 and an optional cloud based CV/SR service 30.

The wearable display 10 may be glasses such as wearable CV eyepieces or Augmented Reality (AR) glasses 10. The AR glasses may include a built-in camera, a microphone (MIC), an integrated LCD display and other I/O peripherals used to capture natural inputs through the AR glasses 10. However, the wearable display 10 is not limited thereto and may include other elements used to capture natural inputs. The natural inputs captured by the AR glasses 10 may include image data of an object, a gesture, a posture, a touch action from the user's finger and/or a voice command. However, it is noted that the natural inputs captured by the AR glasses 10 are not limited to those noted above and other types of inputs can be captured by the AR glasses 10.

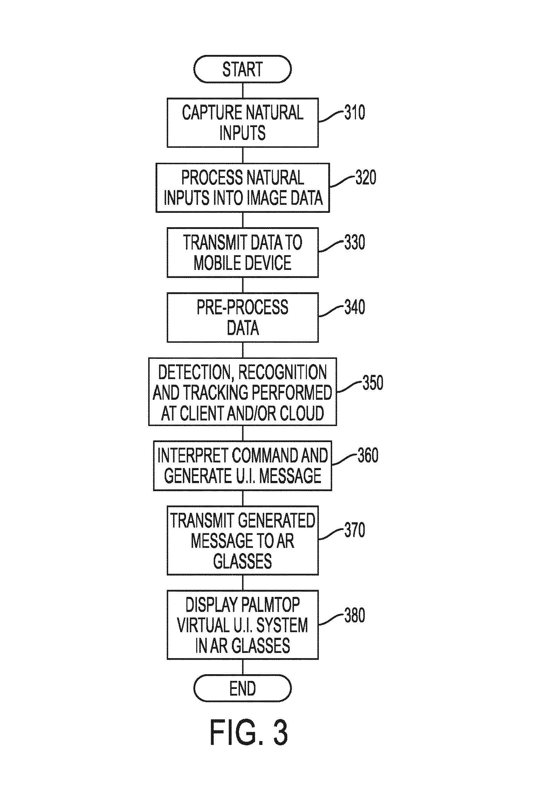

With respect to the electronic device 20, the electronic device 20 may be a mobile communication device, a tablet or any other portable or non-portable electronic device which the user of the glasses 10 may be able to control through the glasses 10. The electronic device 20 may be equipped with a CV engine and/or a SR engine (not shown) used to recognize the image data and/or voice data provided by the glasses 10. Therefore, the CV/SR engine may detect and recognize the object, gesture, posture, touch action from the user's finger and voice command and output a result which may be interpreted as UI commands and UI events, which will be later on transformed into UI messages output by a message generator as explained later on with respect to FIG. 3. The CV/SR engine may be completely implemented in the electronic device 20 or may be implemented in the cloud based CV/SR service 30. Alternatively, the CV/SR engine may be partially implemented in the electronic device 20 and partially implemented in the cloud based CV/SR service 30. For example, if the electronic device 20 does not have the capability of fully recognizing and interpreting the image data and/or the voice data provided by the glasses 10, the electronic device 20 may submit the image data and/or the voice data to the cloud based CV/SR service 30 to recognize the image data and/or voice data. This could be done with the purpose of improving recognition accuracy, performance and to extend the battery life of the electronic device 10. In addition to providing the image data and/or voice data recognition service, the cloud based CV/SR service 30 may provide other services, such as audio and media services like Internet Radio or Video Streaming.

However, it is noted that the wearable display 10, the electronic device 20 and the cloud based CV/SR service 30 are not limited to the examples listed above and can be any other types of devices and services. For example, the wearable display 10 is not limited to glasses, particularly AR glasses, but can be any type of wearable gear having a display adapted to it. Similarly, the electronic device 20 is not limited to a mobile communication device, such as a smartphone, but can be any electronic device such as an MP3 player, a gaming device or a computing device. Finally, the cloud based CV/SR service 30 is not limited to a media service such as a music and/or video service but can be any type of service such as a productivity service, messaging service and the like.

As illustrated in FIG. 1, the user 40 of the AR glasses 10 can control the electronic device 20 without high-precision interaction, i.e., without touching the electronic device 20 with a finger or a stylus. Therefore, the user 40 can control the electronic device 20 with ease by using natural inputs even if the device is not in the user's hand. Accordingly, if the electronic device 20 is a mobile phone and is stowed away, the user of the electronic device 20 can control the electronic device 20 without having to take the electronic device 20 out of his/her pocket or purse. As long as a connection exists between the electronic device 20 and the glasses 10, the user may control the electronic device 20.

Regarding the connection between the electronic device 20 and the glasses 10, it is to be noted that such communication can be of various forms including wired and wireless connections. For example, assuming that the communication between the electronic device 20 and the glasses 10 is wireless, the electronic device 20 and the glasses 10 may communicate with each other over a Bluetooth (BT) or Wi-Fi connection. However, it is to be noted that this is merely an example of a communication between the electronic device 20 and the glasses 10 and the communication can be of other types of wireless communications, such as a Zigbee communication.

Further, as will be explained later, the interaction between the user 40 and the electronic device 20 through the interface, i.e., the AR glasses 10 provides a personalized and configurable UI experience. The interaction between the user 40 and the electronic device 20 also provides an extra level of protection for the information being displayed to the user 40. For example, since the information displayed on the AR glasses 10 will mainly be visible only to the user 40 of the AR glasses 10, the displayed information is kept private. Additionally, by not having to remove the electronic device 40 from the user's storage area, such as his/her pocket or purse, the safety of the electronic device 40 is enhanced since the electronic device 40 is not easily exposed making it more difficult for a thief to take away the electronic device 40 from the user.

In further detail, the AR glasses 10 may include a camera (not shown) to capture an image and/or video of an object. The captured image/video of the object is processed by a CV/SR recognition system or engine (not shown). As noted above, the CV/SR engine may detect and recognize the object, gesture, posture, touch action from the user's finger and a voice command and output a result which may be interpreted as UI commands and UI events, which will be later on transformed into UI messages output by a message generator as explained later on with respect to FIG. 3. The image captured by the AR glasses 10 can be of various types such as for example, 3D positions of the user's hand, motion of the user's hands, gestures, postures, and movements of the user's fingers. For example, the movements of the user's fingers may include a touch movement, swipes or scribbles. These input signals are then translated into UI events that drive the UI of the mobile device 20.

FIG. 2 is a view of a computer vision detection area of an input device of the system according to an embodiment of the present disclosure.

Referring to FIG. 2, the input device of the system 100 can include a pair of glasses such as AR glasses 200. The AR glasses 200 may include a processor (not shown), a lens 230 including a CV detection area 210, and a wearable frame 220 to support the lens 230 including the CV detection area 210. The AR glasses 200 may further include a microphone (not shown) and a camera (not shown) to capture sound and images which will aid in recognizing a command input through the AR glasses 200.

The CV detection area 210 is an area which overlaps a field of view of a user of the system. Therefore, when the user 40 of the system 100 places his/her hand in front of the AR glasses 200 and particularly in front of the CV detection area 210, the CV recognition system (not shown) will generate an input signal according to the motion of the user's hand in front of the CV detection area 210. That is, the CV detection area 210 is an area which permits user interaction.

The CV detection area 210 of the AR glasses 200 is disposed in a center area of the lens of the AR glasses 200. As illustrated in FIG. 2, the CV detection area 210 is a rectangular area located in the center of the lens of the AR glasses 200. However, it is noted that the shape of the CV detection area 210 is not limited to a rectangular shape but can be of any other shape or form capable of detecting a user's motion performed in front of the AR glasses 200.

Further, the CV detection area 210 with the assistance of the camera and microphone (not shown) may capture images and/or video of gestures performed in front of the AR glasses 200. The captured images and/or video of the gestures performed by the user 40 of the system 100 in front of the CV detection area 210 are processed by a CV/SR engine (not shown) and translated into user commands. It is further noted that the CV/SR engine (not shown) can be any combination of hardware and/or software known in the art and capable of processing the movement of objects in a field of view of the AR glasses 200 and/or voice commands and converting such movements and/or voice commands into signals and thus a detailed description of the CV/SR engine and its components will be omitted.

The system 100 is activated and deactivated according to various processes. For example, the user of the system 100 can activate the AR glasses 200 by extending his/her hand and/or arm and looking at his/her hand or arm through the AR glasses 200. Similarly, the user of the system 100 can deactivate the system 100 by focusing on a surface away from his/her hand. However, it is to be noted that these are simply examples of how the system 100 and/or the AR glasses 200 can become activated and deactivated and thus the process of activating and deactivating the AR glasses 200 and the system 100 is not limited thereto. That is, the user of the system 100 can activate and deactivate the system 100 and the AR glasses 200 by simply moving his/her hands and or arms in front of the AR glasses 200 or by performing a particular motion in front of the glasses or away from them. Similarly the system can be activated or deactivated by simply pressing a switch (not shown) in either the AR glasses 200 or on the mobile electronic device 20 or through a voice command. Further, the AR glasses 200 may be activated through a voice command of the user of the system 100.

As previously noted, when the glasses 200 are activated, a dynamically in-lens overlaid UI display is generated on the glasses 200 and is superimposed on a user's hand. By generating the overlaid UI display on the user's hand, the user of the glasses can easily visualize notifications/messages and other information without moving his/her head. Therefore, the glasses 200 allow the user to comfortably view information and interact with an electronic device.

Furthermore, it is noted that the glasses 200 may be used indoors or outdoors since the display of the glasses may automatically adjust according to environmental factors. Therefore, the UI attributes, such as colors, font, size, etc., may change adaptively based on light or other environmental conditions.

Additionally, it is noted that the glasses 200 may be powered in various ways. For example, the glasses 200 may include their own source of power. That is, the glasses 200 may be equipped with a long lasting battery or a rechargeable battery or a combination of both (not shown). Further, the glasses 200 may draw power from a variety of sources well known in the art and thus a detailed description of such sources will be omitted.

It is further noted that the system 100 and its components may enter a standby mode to conserve battery life when no inputs are detected by the glasses after a period of time. Alternatively, the system 100 may enter into a standby mode according to a user performing a particular motion in front of the glasses, by simply pressing a switch on either the glasses 200 or the electronic device 10 as noted above or through a voice command of the user of the system 100. However, the examples described above are merely exemplary and the system including the glasses may enter into standby mode according to other methods.

FIG. 3 is a flowchart illustrating interacting with a system according to an embodiment of the present disclosure.

Referring to FIG. 3, at operation 310, the glasses 200 capture natural inputs input by the user of the system. It is noted that this operation can be performed after the glasses 200 have been activated or can be performed to activate the glasses 200. The natural inputs may be input into a UI displayed on the glasses 200 and superimposed on the user's hand or through a voice command or a combination of both. The natural inputs may be gestures performed by the user of the glasses 200 in the CV detection area 210 and captured by the camera (not shown) mounted on the glasses.

Thereafter, at operation 320, the natural input is processed by the glasses 200 and converted into image data. At operation 330, the image data is then transmitted from the glasses 200 to the mobile device 20 for further processing. At operation 340, the image data is pre-processed at the mobile device 20. Once the image data has been pre-processed, at operation 350, detection, recognition and tracking of the image data is performed. The detection, recognition and tracking can be performed in the mobile device itself using a client based CV engine or the client based Speech Recognition (SR) engine or a combination thereof. Alternatively, the detection, recognition and tracking can be performed on the cloud based CV engine or on the cloud based Speech Recognition (SR) engine or a combination thereof.

At operation 360, the natural input which is input into the glasses 200 and processed by the client based engines and/or by the cloud based engines is interpreted into a command and a UI message is generated. Thereafter, at operation 370, the generated message is transmitted to the glasses 200 to display a palmtop virtual UI system on the glasses 200 which is superimposed on the user's hand and at operation 380 the palmtop virtual UI system is displayed on the in-lens display of the glasses 200.

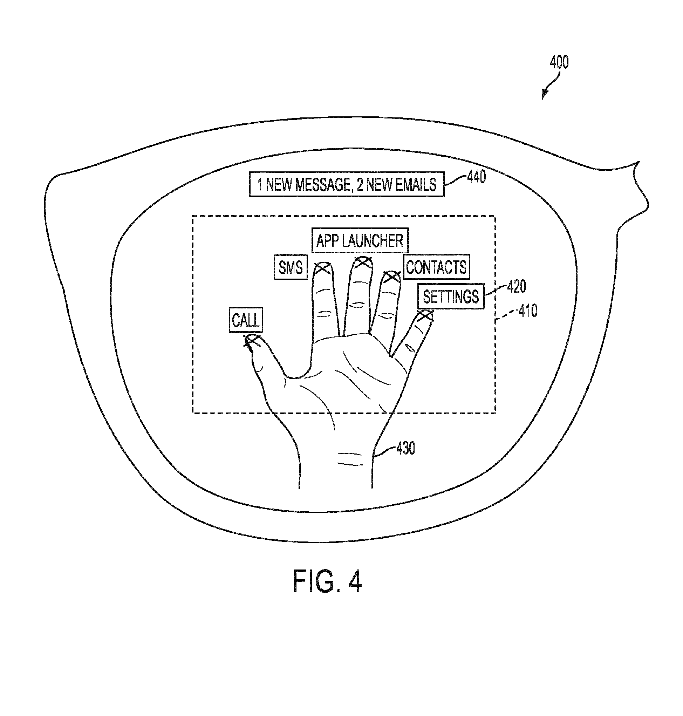

FIG. 4 is an example of a system menu displayed on an input device of the system according to an embodiment of the present disclosure.

Referring to FIG. 4, the glasses 400 or input device includes a CV detection area 410, a system menu 420 displayed on the CV detection area 410 superimposed on a user's hand 430 and a display area 440 disposed above the CV detection area 410.

The system menu 420 displayed on the CV detection area 410 is superimposed on the user's hand 430. The system menu 420 may include various control functions, such as a call function, an SMS function, an application launcher function, a contacts function and a settings function. The display area 440 meanwhile displays information related to the system menu 420 or additional information. For example, the display area 440 illustrated in FIG. 4 displays information related to the number of messages and emails. However, it is noted that the number of new messages and new emails are merely exemplary embodiments of the information that can be displayed in the display area 440 and other types of information may be displayed in the display area 440.

Referring back to FIG. 4, when a user of the system 100 places his/her hand in the field of view of the CV detection area 410 the system becomes activated and displays the system menu 420 which is superimposed on the user's hand 430. The system menu 420 can include icons of a menu previously set by the user of the system or can include icons of a menu provided by the manufacturer of the system 100. In the instant case, the system menu 420 is a menu for controlling various function of the mobile device 20, illustrated in FIG. 1. As discussed above, the system menu 420 is superimposed on the user's hand 430 and an icon is superimposed on each of the fingers of the user's hand. However, it is noted that the system menu 420 is simply an exemplary embodiment and the system menu can display different icons in different forms.

The system menu 420 can be activated according to various processes. For example, as illustrated in FIG. 4, the system menu 420 is activated when the user of the system 100 spreads his/her fingers of his left hand in a field of view of the glasses 400 such as the CV detection area 410. The system menu which includes a UI is rendered as pop-up icons in the lens display of the glasses 400. It is to be noted that the displaying of the UIs is not limited to the CV detection area 410 but the UIs can also be displayed in any area of the lens display of the glasses 400. For example, the icons for the number of new message and emails may be displayed outside of the CV detection area 410.

The menu selection of the various UIs displayed on the lens of the glasses 400 may be performed by touching the different finger tips of the user's left hand using the user's right hand (not shown). However, this is merely an example of selecting the icons and the icons may be selected through other processes such as, a particular gesture of the hand or by selecting the fingers of the left hand using a stylus or pen (not shown).

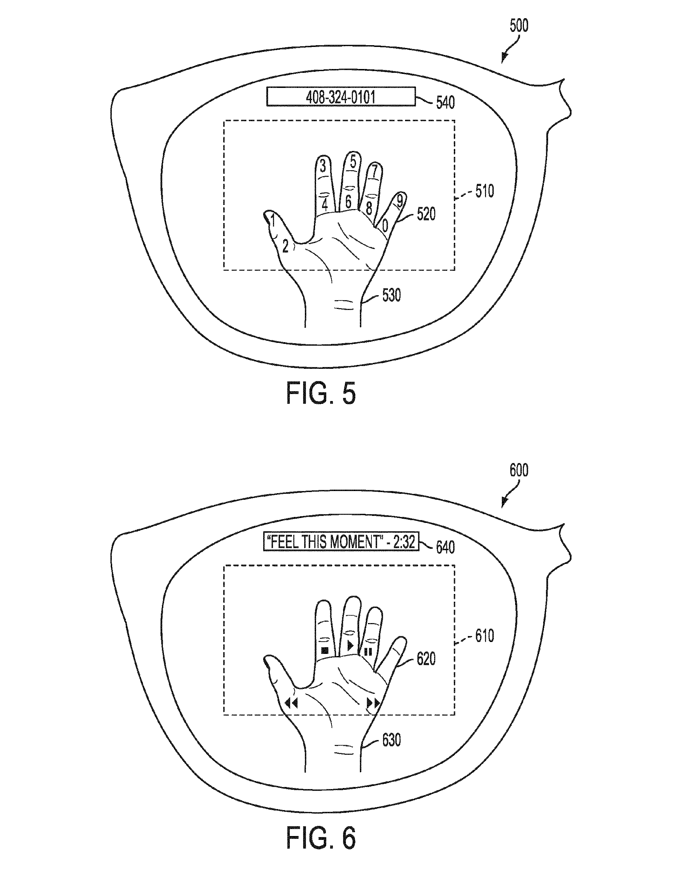

FIG. 5 is an example of a menu displayed on an input device of the system according to an embodiment of the present disclosure.

Referring to FIG. 5, the glasses 500 include a CV detection area 510, a UI or a dialer menu 520, displayed on the CV detection area 510 superimposed on a user's hand 530, and a display area 540 disposed above the CV detection area 510.

Particularly, FIG. 5 illustrates the dialer menu 520 displayed on the CV detection area 510 of the glasses 500 superimposed on the user's hand 530. As illustrated in FIG. 5, the numbers of the dialer are superimposed on each of the fingers of the user's hand 530 of the glasses 500. For example, the dialer's numeric digits are rendered into a contour of the user's left hand and two numbers are displayed on each finger. Accordingly, when the user wants to dial a number, he/she selects the numbers displayed on the fingers of the left hand by touching the numbers of the dialer with his/her right hand. Once the numbers are selected from the dialer displayed on the left hand using the right hand (not shown), the numbers are displayed on the display area 540 disposed above the CV detection area 510. Finally, when the user of the system wants to place the call, he or she may perform a particular hand gesture which is recognized by the system as a command to place the call. For example, once the user of the system has selected all seven numbers as illustrated in FIG. 5, the user of the system may close his left hand in form of a fist generating a command which is interpreted by the glasses 500 as a call command. However, it is noted that this gesture is simply an example of how a user would place a call and many other gestures, movements of the hand(s) and/or voice commands may be used to generate a signal to place a call. For example, the user of the glasses 500 may simply speak a command such as "place call". Similarly, other gestures and/or voice commands can be used to end a call such as for example, swiping a finger across the user's palm or by touching an icon displayed on the glasses and superimposed on the user's hand indicating ending a call or by simply speaking a command such as "end call". Similarly, many other hand gestures and/or voice commands can be used to edit and/or delete the numbers displayed in the display area 540. For example, the user of the glasses 500 may use a swipe command to erase some or all of the numbers from the display area 540 or speak a particular command.

It is noted that the superimposing or rendering of the numbers on each of the fingers of the user's left hand is simply an example of superimposing the menu on the user's hand and the numbers may be rendered in many other forms or shapes. For example, the numbers rendered on the palm of the hand may take the form of a dial pad. Similarly, the placing and ending of a call can be part of a menu displayed on the glasses and superimposed on the user's hand. That is, the menu displayed on the glasses and superimposed on the user's hand can take the form of a typical menu displayed on the electronic device.

FIG. 6 is an example of a menu displayed on an input device of the system according to an embodiment of the present disclosure.

Referring to FIG. 6, the glasses 600 include a CV detection area 610, a menu 620, displayed on the CV detection area 610 superimposed on a user's hand 630, and a display area 640 disposed above the CV detection area 610.

In the instant case, the menu 620 displayed on the CV detection area 610 superimposed on the user's hand 630 is a media player menu. For example, the media player menu may include various control functions, such as a start, stop, pause, resume, forward and rewind. The display area 640 meanwhile displays information of songs selected using the media player menu. The display area 640 may also provide information regarding not only the name of the song but also a remaining time of the song or the elapsed time of the song. However, it is noted that these are merely exemplary embodiments of the information that can be displayed in the display area 640 and other types of information may be displayed in the display area 640.

Furthermore, the media player menu is capable of receiving inputs from a user of the system in a similar fashion as those discussed above. That is, the user of the system may control the various functions of the media player displayed on the CV detection area 610 and superimposed on the left hand of the user by selecting the various functions with the right hand of the user and/or by speaking a voice command. However, receiving inputs using a voice command and/or a user's hand is merely an example and the media player may receive inputs in many other ways. For example, certain gestures of the hand may be translated into input commands, such as the user making a fist with his left hand. Similarly a swiping motion on the left hand using the right hand may be used to switch between songs.

Further, it is noted that although FIG. 6 illustrates a media player menu and a name of a song and elapsed time being displayed on the display area 640 this is an example, and other menus and information may be displayed on the CV detection area 610 and in the display 640. For example, video, photos and/or other media may be displayed on either or both of the CV detection area 610 and the display 640. That is, a user may use the CV detection area and the display area to display and view more than a menu and song information.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a wearable frame;
at least one lens including a Computer Vision (CV) detection area; and
a processor;
wherein the CV detection area is configured to generate and to display a User Interface (UI) and to translate a user signal received in a field of view of the CV detection area into a UI command.

2. The electronic device of claim 1, wherein the UI is superimposed on an external surface of the system and is configured to translate the signal received in the field of view of the CV detection area performed on the external surface of the system into the command to control an electronic device connected to the system or to perform a function on a cloud based system accessible by the electronic device.

3. The electronic device of claim 2, wherein the external surface is a hand of a user of the electronic device connected to the system,
wherein the signal received in the field of view of the CV detection area comprises at least one of a hand gesture, posture and motion.

4. The electronic device of claim 1, wherein the system is activated when at least one of a motion signal is input in the field of view of the CV detection area and an audio signal is input,
wherein the motion signal is generated by an object being placed in the field of view of the CV detection area.

5. The electronic device of claim 1, wherein the system is deactivated when at least one of a motion signal is input in the field of view of the CV detection area and an audio signal is input.

6. The electronic device of claim 4, wherein the system enters into a standby mode when no motion signal is received in the CV detection area or no audio signal is input.

7. A method for controlling an electronic device using natural inputs, the method comprising:
generating and displaying a User Interface (UI) on an input apparatus;
receiving a natural input; and
translating the received natural input into image data and interpreting the image data as a UI command.

8. The method of claim 7, wherein the UI is displayed on the input apparatus and the UI is superimposed on a hand of a user of the electronic device.

9. The method of claim 7, wherein the received natural input comprises at least one of a motion of one or both hands of a user of the electronic device, a swipe action or scribble action of at least one finger of the hands of the user of the electronic device, and a voice command of the user of the electronic device.

10. A Computer Vision (CV) assisted virtual User Interface (UI) system comprising:
a head mounted wearable user device;
at least one lens including a CV detection area; and
a camera configured to capture images of a user of the head mounted wearable device and to output a signal in response to the captured image,
wherein the CV detection area is configured to generate and to display the UI and to translate the output signal into a UI command.

11. The system of claim 10, wherein the head mounted wearable user device comprises Augmented Reality (AR) glasses.

12. The system of claim 10, wherein the captured images of the user comprises at least one of hand motions and hand gestures.

13. The system of claim 10, wherein the UI is superimposed on a surface external to the system,
wherein the external surface on which the UI is superimposed comprises a hand of a user of the system.

14. A method of recognizing and translating natural input signals into User Interface (UI) commands and messages to manage and control a Palmtop virtual UI system, the method comprising:
receiving the natural input signals;
recognizing and translating the received natural input signals into the UI commands and messages; and
generating and displaying the UI on the input device.

15. The method of claim 14, wherein the natural inputs comprise voice commands and the voice commands are recognized and translated into the UI commands and messages.
